# EUROPÄISCHE PATENTSCHRIFT

(11) **EP 2 742 553 B1**
(45) Veröffentlichungstag und Bekanntmachung des Hinweises auf die Patenterteilung: **16.09.2015**
(21) Anmeldenummer: 12750321.7
(22) Anmeldetag: 03.08.2012
(51) Int. Cl.: H01M 2/20

(54) **VERBINDUNGSVORRICHTUNG ZUM VERBINDEN VON WENIGSTENS ZWEI BATTERIEZELLEN**
CONNECTING APPARATUS FOR CONNECTING AT LEAST TWO BATTERY CELLS
DISPOSITIF DE CONNEXION POUR LA CONNEXION D'AU MOINS DEUX ÉLÉMENTS DE BATTERIE

(30) Priorität: 11.08.2011 DE 102011052569
(43) Veröffentlichungstag der Anmeldung: 18.06.2014
(73) Patentinhaber: Rehau AG & Co, 95111 Rehau (DE)
(72) Erfinder: KRAWCZUK, Grzegorz, 95111 Rehau (DE)
(86) Internationale Anmeldenummer: PCT/EP2012/003314
(87) Internationale Veröffentlichungsnummer: WO 2013/020681

(56) Entgegenhaltungen:
- WO-A1-2011/060969
- JP-A- 2010 205 535

## Beschreibung

### Hintergrund der Erfindung

Die vorliegende Erfindung betrifft eine Verbindungsvorrichtung zum Verbinden von wenigstens zwei Batteriezellen.

Bei bekannten Verfahren bzw. Methoden zur Verbindung von Batteriezellen, insbesondere zur Verbindung von Batteriezellen einer Traktionsbatterie bzw. Antriebsbatterie eines Elektrofahrzeugs, werden die Pole der Batteriezellen durch Schweißen oder durch eine Schraubverbindung miteinander verbunden, wobei eine Schweißverbindung an der Schweißstelle eine erhöhte Korrosionsneigung aufweist. Eine Schraubverbindung oder auch eine Verbindung mittels Federlaschen ist vorzugsweise bei der Verbindung von Batteriezellen vorgesehen, die in Form sogenannter Rundzellen oder prismatischer Zellen ausgebildet sind. Für die Anzugsmomente der Schraubverbindungen sind zur Vermeidung einer übermäßigen Materialbeanspruchung der Pole herstellerseitige Begrenzungen vorgesehen. Diese Begrenzung der Anzugsmomente geht oft einher mit einer Lockerung der Schraubverbindung, was insbesondere bei einer Traktionsbatterie für ein Elektrofahrzeug mit einer Erhöhung des Kontaktwiderstands verbunden ist, die zur Erzeugung unnötiger Wärme an bzw. in der Schraubverbindung während des Betriebs des Elektrofahrzeugs führt. Weitere Verbindungsvorrichtungen sind in den Dokumenten JP 2010 205 535 A und WO 2011/060969 A1 offenbart.

### Zugrundeliegende Aufgabe

Gegenüber bekannten Lösungen zum Verbinden von Batteriezellen, ist es Aufgabe der Erfindung, eine alternative Verbindungsvorrichtung zum Verbinden von wenigstens zwei Batteriezellen anzugeben und eine Batteriezelle mit einer Bauform anzugeben, die eine Verbindung von wenigstens zwei dieser Batteriezellen über die alternative Verbindungsvorrichtung ermöglicht.

### Erfindungsgemäße Lösung

Diese Aufgabe wird erfindungsgemäß mit einer Verbindungsvorrichtung zum Verbinden von wenigstens zwei Batteriezellen mit den Merkmalen des Anspruchs 1 gelöst.

Die erfindungsgemäße Verbindungsvorrichtung weist wenigstens zwei voneinander beabstandete Pol-Aufnahmen mit wenigstens einer Wandung auf. Zum Verbinden der Batteriezellen ist in jede Pol-Aufnahme jeweils ein Pol der zu verbindenden Batteriezellen wenigstens teilweise einbringbar ist, wobei die Wandung jeder Pol-Aufnahme wenigstens bereichsweise plastisch verformbar ist oder zur Gänze plastisch verformbar ist. Nach dem wenigstens teilweisen oder vollständigen Einbringen des Pols in die Pol-Aufnahme ist eine formschlüssige Verbindung zwischen der Batteriezelle und der Pol-Aufnahme bzw. zwischen dem Pol und der Pol-Aufnahme herstellbar bzw. ausbildbar durch plastisches bzw. wenigstens bereichsweise plastisches Verformen der Wandung in Richtung des verengten Bereichs des Pols.

Im Unterschied zu bekannten Lösungen, bei denen insbesondere über eine Schraubverbindung eine Verbindung zwischen den Batteriezellen bzw. Polen vorgenommen wird, kann bei der erfindungsgemäßen Lösung von einer insbesondere für eine Serienfertigung aufwendigen Schraubverbindung abgesehen werden. Eine Schraubverbindung stellt insbesondere eine bekannte Methode zur Verbindung von Batteriezellen einer Traktionsbatterie eines Elektrofahrzeugs dar, wobei sich die Schraubverbindung jedoch, insbesondere infolge einer herstellerseitig geforderten Begrenzung des Anzugsmoments, lockern bzw. lösen kann, was für ein Elektrofahrzeug durch die damit einhergehende Erhöhung des Kontaktwiderstands mit der Erzeugung unnötiger Wärme an bzw. in der Schraubverbindung während des Betrieb des Elektrofahrzeugs verbunden ist.

Im Unterschied zu den bekannten Lösungen ermöglicht die erfindungsgemäße Lösung auf einfache und praktische Weise die Verbindung von wenigstens zwei Batteriezellen bzw. von wenigstens zwei Polen benachbarter Batteriezellen durch wenigstens teilweises Einbringen der Pole in die Pol-Aufnahmen und plastisches Verformen der Wandungen zur Schaffung von formschlüssigen Verbindungen zwischen den Batteriezellen und den Pol-Aufnahmen bzw. zwischen den Polen und den Pol-Aufnahmen.

Mit der erfindungsgemäßen Lösung kann vorteilhaft insbesondere auch die Herstellungszeit bzw. Prozesszeit zur Herstellung der Verbindung im Vergleich zu den bekannten Schraubverbindungen deutlich reduziert werden. Mit der erfindungsgemäßen Lösung kann daher insbesondere auch eine automatisierte Herstellung einer Vielzahl von Traktionsbatterien realisiert werden, die jeweils eine Mehrzahl von miteinander verbundenen Batteriezellen aufweisen.

Erfindungsgemäß ist unter einer formschlüssigen Verbindung eine Verbindung zu verstehen, bei welcher durch eine korrespondierende Gestaltung bzw. Ausbildung der Verbindungspartner eine Bewegung der Verbindungspartner gegeneinander bzw. zueinander nicht möglich ist oder bei welcher die Verbindungspartner derart ausgebildet sind, dass nur eine eingeschränkte Bewegbarkeit bzw. Verschiebbarkeit der Verbindungspartner gegeneinander bzw. zueinander möglich ist.

Die Verbindungsvorrichtung kann eine beliebige Mehrzahl von Pol-Aufnahmen aufweisen, um eine beliebige Mehrzahl von Batteriezellen auf einfache und praktische Weise miteinander verbinden zu können.

Besonders bevorzugt ist ein Bereich der Wandung zur Herstellung bzw. Schaffung der formschlüssigen Verbindung an den verengten Bereich des Pols durch Verformen anpressbar, einhergehend mit der Schaffung einer sehr formstabilen bzw. festen formschlüssigen Verbindung.

Bei einer bevorzugten Ausführungsform besteht die Verbindungsvorrichtung zur Herstellung einer elektrisch leitenden Verbindung zwischen den Batteriezellen wenigstens teilweise oder zur Gänze aus einem elektrisch leitfähigen Material. Eine gemäß dieser bevorzugten Ausführungsform ausgebildete Verbindungsvorrichtung ermöglicht zusätzlich zu der vorteilhaften Bereitstellung einer stabilen mechanischen Verbindung zwischen den Polen bzw. den Batteriezellen auch die Herstellung einer elektrischen leitenden Verbindung zwischen den Polen bzw. den Batteriezellen, so dass über die Verbindungsvorrichtung wenigstens zwei bzw. eine beliebige Mehrzahl von Batteriezellen bzw. Polen auf praktische und einfache Weise elektrisch leitend miteinander verbindbar sind. Dies ist insbesondere bei der Herstellung einer Traktionsbatterie für ein Elektrofahrzeug aus einer Mehrzahl von Batteriezellen von Vorteil.

Erfindungsgemäß weist jede Pol-Aufnahme einen einseitig offenen Aufnahmebereich auf, wobei in dem Aufnahmebereich ein Federelement angeordnet ist, wobei das Federelement bei bestehender formschlüssiger Verbindung zwischen der Batteriezelle und der Pol-Aufnahme (bzw. zwischen dem Pol und der Pol-Aufnahme) in einem gespannten Zustand zwischen der Wandung und dem Pol angeordnet ist und eine Druckkraft auf die Wandung und den Pol ausübt. Durch Vorsehen des Federelements in dem einseitig offenen Aufnahmebereich, in welchen jeweils ein Pol wenigstens teilweise einbringbar ist, kann die formschlüssige Verbindung zur wesentlichen Erhöhung der Stabilität derselben vorteilhaft verspannt werden. Bevorzugt kann bei dieser praktischen Ausführungsform das Federelement wenigstens teilweise oder zur Gänze aus einem elektrisch leitfähigen Material bestehen, einhergehend mit der Schaffung einer sehr verlustfreien elektrischen Verbindung zwischen dem Pol und der Wandung bzw. zwischen dem Pol und der Pol-Aufnahme. Durch diese elektrische Verbindung können der Pol und die Verbindungsvorrichtung vorteilhaft auf gleichem elektrischem Potential gehalten werden. Das Federelement kann bevorzugt in Form einer Schraubenfeder oder in Form eines flächigen polymerem Schaummaterials ausgebildet sein, der wenigstens teilweise elastisch ausgebildet ist. Entsprechend kann das polymere Schaummaterial mit einer elektrisch leitfähigen Beschichtung oder einer Metallisierung versehen sein.

Bei einer nicht beanspruchten Ausführungsform weist die Verbindungsvorrichtung ein plattenförmiges Element auf, an dem die Pol-Aufnahmen vorgesehen sind. Vorzugsweise ist bei dieser Ausführungsform für jede Pol-Aufnahme eine das plattenförmige Element durchsetzende Öffnung vorgesehen durch welche der Pol zum wenigstens teilweisen Einbringen in die Pol-Aufnahme durchführbar ist. Das plattenförmige Element besteht hierbei vorzugsweise aus einem metallischen Blechmaterial. Über das plattenförmige Element kann auf einfache und praktische Weise eine Verbindung einer Mehrzahl von Polen bzw. Batteriezellen vorgenommen werden, die hierfür in den Pol-Aufnahmen aufzunehmen sind, welche vorzugsweise angepasst an eine vorgegebene Anordnung der Batteriezellen zueinander an dem plattenförmigen Element vorgesehen sein können. Die Verwendung eines plattenförmigen Elements ist insbesondere bei der Ausbildung einer Traktionsbatterie für ein Elektrofahrzeug von Vorteil, bei der zur Ausbildung derselben eine Mehrzahl von Batteriezellen gemäß einer vorgegebenen Anordnung zu verbinden sind. Das plattenförmige Element kann ferner vorteilhaft als abdeckendes Element zum Schutz der Batteriezellen insbesondere vor der Beaufschlagung mit Partikeln, insbesondere mit Schmutzpartikeln dienen. Zudem kann über das plattenförmige Element auch eine passive und/oder aktive Kühlung der Batteriezellen erfolgen, wobei bei der aktiven Kühlung beispielsweise mindestens eine Kühlleitung wärmeleitend mit dem plattenförmigen Element verbunden ist.

Besonders bevorzugt kann die Verbindungsvorrichtung einstückig aus einem metallischen Blechmaterial gebildet sein und zur Ausbildung der Pol-Aufnahmen können hierbei Verprägungen oder Vertiefungen vorgesehen sein, welche in das Blechmaterial eingedrückt bzw. eingepresst sind.
Bei einer nicht beanspruchten Ausführungsform weist jede Pol-Aufnahme wenigstens zwei voneinander beabstandete Wandungen auf, die an dem plattenförmigen Element angeformt sind, und wobei wenigstens ein an das plattenförmige Element angrenzender Abschnitt jeder Wandung plastisch verformbar ist zur Herstellung bzw. Schaffung der formschlüssigen Verbindung durch Verbiegen jeder Wandung in Richtung des verengten Bereichs.

Insbesondere mit einer gemäß dieser praktischen Ausführungsform ausgebildeten Verbindungsvorrichtung lässt sich durch einfaches Verbiegen der Wandungen in Richtung des verengten Bereichs auf einfache und praktische Weise ein Verbindung von wenigstens zwei Batteriezellen bzw. von wenigstens zwei Polen benachbarter Batteriezellen ausbilden. Zur Realisierung der Verbiegbarkeit ist wenigstens ein an das plattenförmige Element angrenzender Abschnitt jeder Wandung plastisch verformbar. Vorzugsweise ist hierbei jede Wandung zur Gänze plastisch verformbar bzw. zur Gänze aus einem plastisch verformbaren Material ausgebildet.

An dem plattenförmigen Element kann wenigstens ein Federelement angeordnet sein, wobei das Federelement bei bestehender formschlüssiger Verbindung zwischen der Batteriezelle und der Pol-Aufnahme in einem gespannten Zustand vorliegt und eine Druckkraft auf das plattenförmige Element und einen Zellenkörper der Batteriezelle, von dem sich der verengte Bereich des Pols erstreckt, ausübt. Durch Vorsehen des Federelements kann die formschlüssige Verbindung zwischen der Batteriezelle und der Pol-Aufnahme zur wesentlichen Erhöhung der Stabilität derselben vorteilhaft verspannt werden. Das Federelement kann bevorzugt in Form einer Schraubenfeder oder in Form eines flächigen polymerem Schaummaterials ausgebildet sein, der wenigstens teilweise elastisch ausgebildet ist.

Die erfindungsgemäße Batteriezelle weist einen Pol mit einem einen Hinterschnitt, vorzugsweise in Längsrichtung der Batteriezelle, bildenden verengten Bereich auf, der für die Ausbildung der formschlüssigen Verbindung zwischen der Batteriezelle und einer Pol-Aufnahme (bzw. zwischen dem Pol und der Pol-Aufnahme) vorgesehen ist. Für den Fall einer nicht-länglich ausgebildeten Batteriezelle oder einem abgewinkelten Pol befindet sich der Hinterschnitt selbstredend nicht in Längsrichtung der Batteriezelle. Der Hinterschnitt befindet sich vorzugsweise in Montagerichtung der Pol-Aufnahme.

Vorzugsweise ist der Pol im Wesentlichen in Form eines Rotationskörpers mit einer Rotationsachse ausgebildet ist, wobei die Rotationsachse, um welche der Rotationskörper rotationssymmetrisch ist, vorzugsweise parallel zur Längsachse der Batteriezelle ausgerichtet ist oder vorzugsweise parallel zur Längserstreckung der Batteriezelle ausgerichtet ist. Infolge der rotationssymmetrischen Ausbildung ist der verengte Bereich rotationssymmetrisch um die Rotationsachse, einhergehend mit der Möglichkeit der Schaffung einer sehr stabilen und spielfreien formschlüssigen Verbindung zwischen der Batteriezelle und der Pol-Aufnahme bzw. zwischen dem Pol und der Pol-Aufnahme. Der verengte Bereich kann hierbei z.B. ein im Wesentlichen auf halber Länge des Pols vorgesehener Bereich sein.

Bei einer praktischen Ausführungsform ist der verengte Bereich ein Endabschnitt des Pols, der an einen Zellenkörper der Batteriezelle angrenzt. Auch mit dieser praktischen Ausführungsform der erfindungsgemäßen Batteriezelle kann eine sehr stabile und spielfreie formschlüssige Verbindung zwischen der Batteriezelle und der Pol-Aufnahme bzw. zwischen dem Pol und der Pol-Aufnahme geschaffen werden.

Die Batteriezelle kann insbesondere in Form einer sogenannten Rundzelle oder in Form einer sogenannten prismatischen Zelle ausgebildet sein. Insbesondere kann die Batteriezelle eine Batteriezelle für eine Traktionsbatterie eines Elektrofahrzeugs sein.

Die Erfindung betrifft ferner ein Verfahren zum Verbinden von wenigstens zwei Batteriezellen, die jeweils einen Pol mit wenigstens einem einen Hinterschnitt, vorzugsweise in Längsrichtung der Batteriezelle, bildenden verengten Bereich aufweisen, wobei das Verfahren die folgenden Schritte umfasst: (A) Bereitstellen einer Verbindungsvorrichtung zum Verbinden der Batteriezellen, wobei die Verbindungsvorrichtung wenigstens zwei voneinander beabstandete Pol-Aufnahmen mit wenigstens einer Wandung aufweist, wobei die Wandung jeder Pol-Aufnahme wenigstens bereichsweise plastisch verformbar ist oder zur Gänze plastisch verformbar ist, (B) wenigstens teilweises oder vollständiges Einbringen jedes Pols in jeweils eine Pol-Aufnahme, und (C) Formschlüssiges Verbinden jeder Batteriezelle mit der Pol-Aufnahme bzw. jedes Pols mit der Pol-Aufnahme durch plastisches Verformen bzw. wenigstens bereichsweise plastisches Verformen der Wandung in Richtung des verengten Bereichs des Pols.
Durch Anwenden des erfindungsgemäßen Verfahrens kann auf einfache und praktische Weise eine mechanisch stabile bzw. feste Verbindung zwischen den Batteriezellen geschaffen werden, bei welcher eine stabile formschlüssige Verbindung der Batteriezellen bzw. der Pole mit den Pol-Aufnahmen vorgesehen ist.

Bevorzugt besteht die in Schritt (A) bereitgestellte Verbindungsvorrichtung zur Herstellung einer elektrisch leitenden Verbindung zwischen den Batteriezellen wenigstens teilweise aus einem elektrisch leitfähigen Material, um zusätzlich zu der vorteilhaften Bereitstellung einer stabilen mechanischen Verbindung zwischen den Polen bzw. den Batteriezellen auch die Herstellung einer elektrischen leitenden Verbindung zwischen den Polen bzw. den Batteriezellen zu ermöglichen, wie auch oben bereits dargelegt.

Erfindungsgemäß weist jede Pol-Aufnahme einen einseitig offenen Aufnahmebereich auf, wobei in dem Aufnahmebereich ein Federelement angeordnet ist, und wobei während oder nach Schritt (B) das Federelement durch Aufeinanderzubewegen der Pol-Aufnahme und des Pols in einen gespannten Zustand überführt wird, in welchem das Federelement zwischen der Wandung und dem Pol angeordnet ist und eine Druckkraft auf die Wandung und den Pol ausübt, und wobei Schritt (C) unter Beibehaltung des gespannten Zustands vorgenommen wird.

Durch Vorsehen des Federelements in dem einseitig offenen Aufnahmebereich, in welchen jeweils ein Pol wenigstens teilweise einbringbar ist, kann die formschlüssige Verbindung zur wesentlichen Erhöhung der Stabilität derselben vorteilhaft verspannt werden. Zur Ausbildung des verspannten Zustands ist das Federelement durch einfaches Aufeinanderzubewegen der Pol-Aufnahme und des Pols bzw. durch Bewegen der Pol-Aufnahme in Richtung Pol oder durch Bewegen des Pols in Richtung Pol-Aufnahme in den gespannten Zustand zu überführen und das formschlüssige Verbinden gemäß Schritt (C) unter Beibehaltung des gespannten Zustands vorzunehmen. Auf diese Weise kann auf einfache und praktische Weise ein Verbinden der Batteriezellen bzw. Pole und gleichzeitig ein vorteilhaftes Verspannen mit geringem Aufwand in einem Arbeitsgang realisiert werden.

### Kurzbeschreibung der Zeichnungen

Nachfolgend werden Ausführungsbeispiele der Erfindung anhand der beigefügten Zeichnungen näher erläutert. Es zeigt:
- Fig. 1: eine schematische dreidimensionale Teil-Darstellung eines Ausführungsbeispiels einer erfindungsgemäßen Batteriezelle,
- Fig. 2.1-2.3: schematische Schnittdarstellungen dreier Pole erfindungsgemäßer Batteriezellen,
- Fig. 3: eine schematische Schnittdarstellung eines Ausführungsbeispiels einer erfindungsgemäßen Verbindungsvorrichtung zusammen mit schematischen Schnittdarstellungen zwei erfindungsgemäßer Batteriezellen, welche durch die Verbindungsvorrichtung miteinander verbunden sind,
- Fig. 4: eine schematische dreidimensionale Darstellung der Verbindungsvorrichtung in Fig. 3,
- Fig. 5: eine schematische Schnittdarstellung eines zweiten Ausführungsbeispiels einer Verbindungsvorrichtung zusammen mit schematischen Schnittdarstellungen zweier Pole, die in Pol-Aufnahmen der Verbindungsvorrichtung eingebracht sind,
- Fig. 6A: eine schematische Schnittdarstellung eines dritten Ausführungsbeispiels einer Verbindungsvorrichtung,
- Fig. 6B: eine schematische Draufsicht auf einen aus einem Blechmaterial ausgestanzten Bereich, der für die Ausbildung einer Pol-Aufnahme vorgesehen ist, und
- Fig. 6C: eine schematische Draufsicht auf eine Pol-Aufnahme und
- Fig. 7: eine schematische Schnittdarstellung eines dritten Ausführungsbeispiels einer Verbindungsvorrichtung zusammen mit schematischen Schnittdarstellungen zweier Pole, die in Pol-Aufnahmen der Verbindungsvorrichtung eingebracht sind.

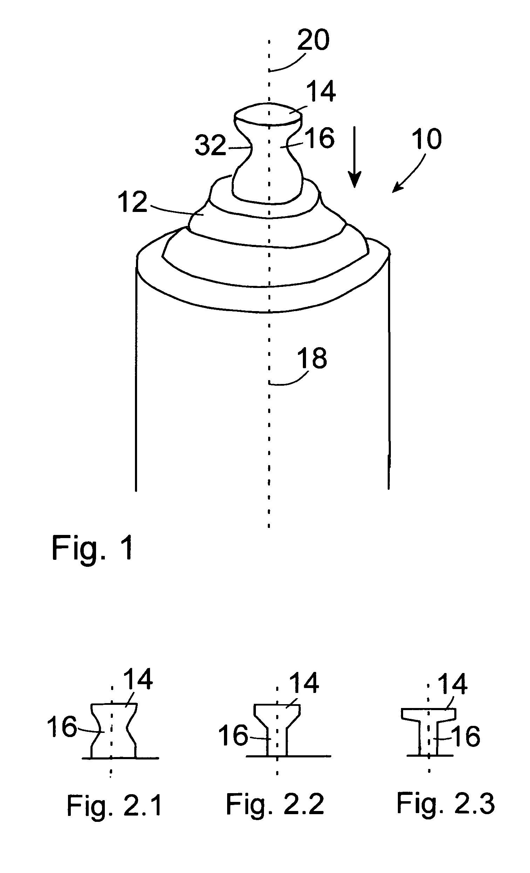

Die in Fig. 1 in Teil-Darstellung gezeigte Batteriezelle 10 weist einen Zellenkörper 12 mit einem an den Zellenkörper 12 angrenzenden Pol 14 auf. Der Pol 14 weist einen verengten Bereich 16 auf, der einen Hinterschnitt in Längsrichtung (symbolisiert durch Pfeil) der Batteriezelle 10 bildet. Der verengte Bereich 16 ist für die Ausbildung der formschlüssigen Verbindung zwischen der Batteriezelle 10 und einer Pol-Aufnahme vorgesehen.

Der Pol 14 ist in Form eines Rotationskörpers bzw. im Wesentlichen in Form eines Rotationskörpers mit einer Rotationsachse 18 ausgebildet ist. Die Rotationsachse 18 ist fluchtend mit einer Längsachse 20 der Batteriezelle 10 ausgerichtet. Infolge der rotationssymmetrischen Ausbildung ist der verengte Bereich 16 rotationssymmetrisch um die Rotationsachse 18, einhergehend mit der Schaffung einer sehr stabilen und spielfreien formschlüssigen Verbindung zwischen dem Pol 14 bzw. der Batteriezelle 10 und der Pol-Aufnahme im verbundenen Zustand. Der verengte Bereich 16 ist im Wesentlichen auf halber Länge des Pols 14 vorgesehen.

Die Fig. 2.1 - 2.3 zeigen schematische Schnittdarstellungen dreier Pole 14 erfindungsgemäßer Batteriezellen, wobei die in Fig. 2. dargestellte Schnittdarstellung eine Schnittdarstellung des in Fig. 1 gezeigten Pols 14 ist. Bei den in den Fig. 2.2 und 2.3 dargestellten Polen 14 sind die verengten Bereiche 16 jeweils Endabschnitte des Pols 14, die an den Zellenkörper der Batteriezelle (hier nicht dargestellt) angrenzen.

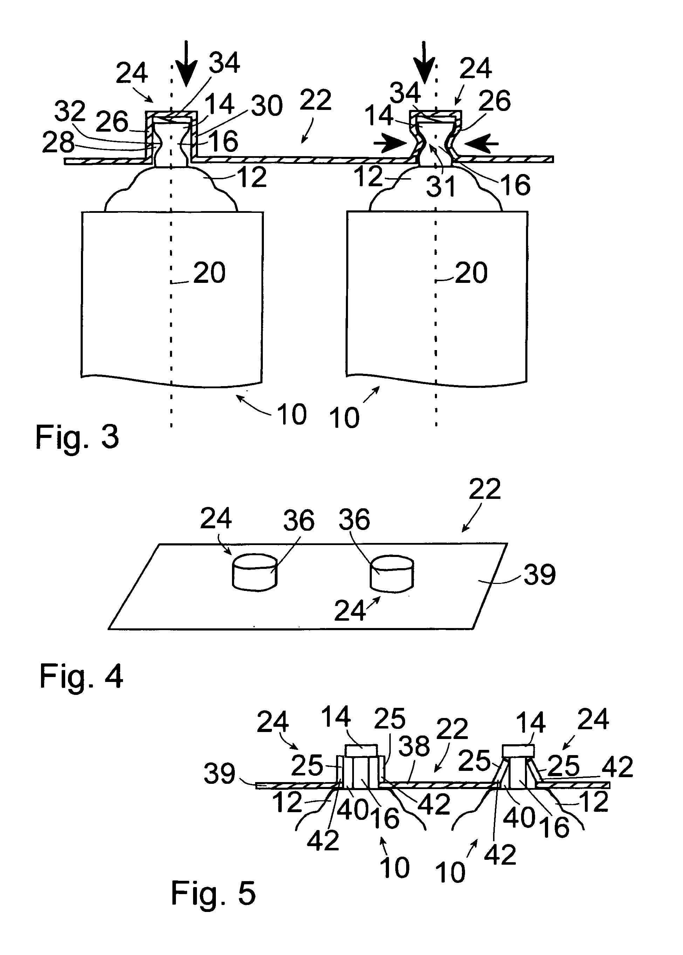

Die Fig. 3 zeigt eine schematische Schnittdarstellung eines Ausführungsbeispiels einer erfindungsgemäßen Verbindungsvorrichtung 22 zusammen mit schematischen Schnittdarstellungen zwei erfindungsgemäßer Batteriezellen 10, welche durch die Verbindungsvorrichtung 22 miteinander verbunden sind.

Die Verbindungsvorrichtung 22 weist bei dem hier dargestellten Ausführungsbeispiel zwei voneinander beabstandete Pol-Aufnahmen 24 mit einer Wandung 26 auf, wobei die Beschränkung auf zwei Pol-Aufnahmen 24 zur Vereinfachung der Darstellung lediglich beispielhaft ist. Erfindungsgemäß kann die Verbindungsvorrichtung 22 eine beliebige Mehrzahl von Pol-Aufnahmen 24 aufweisen.

Jede Pol-Aufnahme 24 weist einen von der Wandung 26 begrenzten einseitig offenen Aufnahmebereich 28 auf, wobei in jede Pol-Aufnahme 24 bzw. in jeden Aufnahmebereich 28 jeweils ein Pol 14 der zu verbindenden Batteriezellen 10 teilweise eingebracht ist. Die Wandung 26 jeder Pol-Aufnahme 24 weist einen plastisch verformbaren Wandungsbereich 30 auf. Dieser Wandungsbereich 30 ist nach dem Einbringen des Pols 14 dafür vorgesehen, eine formschlüssige Verbindung zwischen der Batteriezelle 10 und der Pol-Aufnahme 24 bzw. zwischen dem Pol 14 und der Pol-Aufnahme 24 herzustellen durch Anpressen des Wandungsbereichs 30 an den verengten Bereich 16 mit damit einhergehender plastischer Verformung des Wandungsbereichs 30. Zum teilweisen Einbringen der Pole 14 in die Pol-Aufnahmen 24 können die Pol-Aufnahmen 24 in der durch die beiden vertikalen Pfeile veranschaulichten Montagerichtung über die Pole 14 gestülpt werden.

In Fig. 3 ist die linke Pol-Aufnahme 24 ohne verformten Wandungsbereich 30 dargestellt, um die Situation vor Schritt (C) und nach Schritt (B) des erfindungsgemäßen Verfahrens zum Verbinden von wenigstens zwei Batteriezellen 10 zu veranschaulichen. Die in Fig. 3 rechte Pol-Aufnahme 24 und rechte Batteriezelle 10 veranschaulichen die Situation nach Schritt (C) des erfindungsgemäßen Verfahrens, also nach dem formschlüssigen Verbinden des Pols 14 mit der Pol-Aufnahme 24 durch Verformen des plastisch verformbaren Wandungsbereichs 30 bzw. der Wandung 26 in Richtung des verengten Bereichs 16 (durch entsprechende Pfeile veranschaulicht), wobei bei diesem Ausführungsbeispiel der plastisch verformbare Wandungsbereich 30 bzw. die Wandung 26 zur Schaffung der formschlüssigen Verbindung 31 an die Klemmfläche 32 bzw. Anpressfläche 32 des verengten Bereichs 16 des Pols 14 durch Verformen anpressbar ist.

In dem Aufnahmebereich 28 ist ein Federelement 34 angeordnet, wobei das Federelement 34 bei bestehender formschlüssiger Verbindung 31 zwischen dem Pol 14 und der Pol-Aufnahme 24 in einem gespannten Zustand zwischen der Wandung 26 und dem Pol 14 angeordnet ist und eine Druckkraft auf die Wandung 26 und den Pol 14 ausübt. Durch Vorsehen des Federelements 34 in dem einseitig offenen Aufnahmebereich 28 kann die formschlüssige Verbindung 31 zur wesentlichen Erhöhung der Stabilität derselben vorteilhaft verspannt werden, und zwar dadurch, dass das Federelement 34 bei bestehender formschlüssiger Verbindung 31 eine Druckkraft auf die Wandung 26 und den Pol 14 ausübt. Hierfür ist das Federelement 34, vorzugsweise in der Montagerichtung, durch Ausüben einer Druckkraft auf die Pol-Aufnahme 24 zusammenzupressen bzw. in einen gespannten Zustand zu überführen, wobei sich hierdurch die Pol-Aufnahme 24 auf den Pol (14) zu bewegt. Anschließend ist unter Beibehaltung des gespannten bzw. zusammengepressten Zustands des Federelements 34 der plastisch verformbare Wandungsbereich 30 zur Schaffung der formschlüssigen Verbindung 31 in Richtung des verengten Bereichs 16 zu verformen. Alternativ kann die Pol-Aufnahme auch in Form eines beidseitig offenen Rohrs bzw. in Form eines beidseitig offenen Rohrstücks ausgebildet sein (hier nicht dargestellt).

Die Fig. 4 zeigt eine schematische dreidimensionale Darstellung der Verbindungsvorrichtung 22 in Fig. 3. Die Darstellung zeigt, dass die Verbindungsvorrichtung 22 einstückig aus einem metallischen Blechmaterial 39 gebildet ist, wobei zur Ausbildung der Pol-Aufnahmen 24 Verprägungen 36 vorgesehen sind, welche in das Blechmaterial 39 eingedrückt bzw. eingepresst sind.

Die Fig. 5 zeigt eine schematische Schnittdarstellung eines zweiten Ausführungsbeispiels einer Verbindungsvorrichtung 22 zusammen mit schematischen geschnittenen Teil-Darstellungen von Batteriezellen 10, deren Pole 14 in Pol-Aufnahmen 24 der Verbindungsvorrichtung 22 eingebracht sind.

Die in Fig. 5 dargestellte Verbindungsvorrichtung 22 weist ein plattenförmiges Element 38 auf, an dem die Pol-Aufnahmen 24 vorgesehen sind, welche bei diesem Ausführungsbeispiel jeweils zwei gegenüberliegende und voneinander beabstandete Wandungen in Form von Laschen 25 aufweisen, , die an dem plattenförmigen Element 38 angeschweißt oder angelötet sein können. Bei diesem Ausführungsbeispiel ist für jede Pol-Aufnahme 24 eine das plattenförmige Element 38 durchsetzende Öffnung 40 vorgesehen durch welche der Pol 14 zum teilweisen Einbringen in die Pol-Aufnahme 24 durchführbar ist. Das plattenförmige Element 38 besteht hierbei vorzugsweise aus einem metallischen Blechmaterial 39, wobei die Laschen 25 an dem Blechmaterial 39 angeschweißt oder angelötet sein können. Die Pole 14 weisen im Querschnitt eine T-förmige Form auf. Bei in der Fig. 5 linken PolAufnahme 24 wurde noch keine plastische Verformung der plastisch verformbaren Laschen 25 vorgenommen. Die Laschen 25 der rechten Pol-Aufnahme 24 in Fig. 5 wurden in Richtung des verengten Bereichs 16 gebogen bzw. verformt wodurch die Laschen 25 zur Ausbildung der formschlüssigen Verbindung teilweise zwischen dem Pol 14 und dem Zellenkörper 12 angeordnet sind. Zur Realisierung der Verbiegbarkeit bzw. Verformbarkeit ist wenigstens ein an das plattenförmige Element angrenzender Abschnitt 42 jeder Lasche plastisch verformbar. Vorzugsweise kann jede Lasche zur Gänze plastisch verformbar sein bzw. zur Gänze aus einem plastisch verformbaren Material bestehen.

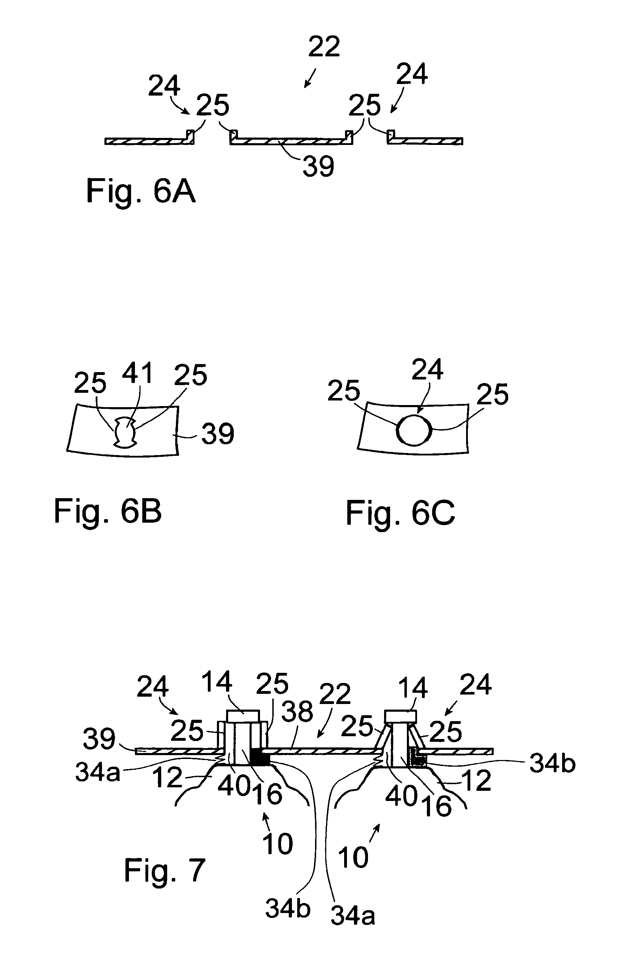

Die Fig. 6A zeigt eine schematische Schnittdarstellung eines dritten Ausführungsbeispiels einer Verbindungsvorrichtung 22, die sich von der in der Fig. 5 gezeigten insbesondere dadurch unterscheidet, dass die Verbindungsvorrichtung 22 einstückig aus einem metallischen Blechmaterial 39 gebildet ist und dass die durch jeweils zwei gegenüberliegende Laschen 25 gebildeten Pol-Aufnahmen 24 durch geeignetes Ausstanzen aus dem Blechmaterial 39 hergestellt sind. Dies ist in Fig. 6B gezeigt, welche den zur Ausbildung einer Pol-Aufnahme 24 aus dem Blechmaterial 39 ausgestanzten Bereich 41 in Draufsicht auf das Blechmaterial 39 schematisch veranschaulicht. Die Fig. 6C veranschaulicht die PolAufnahme 24 in Draufsicht, also nach dem Hochbiegen der durch die Ausstanzung gebildeten Laschen 25.

Die in Fig. 7 dargestellte dritte Ausführungsbeispiel unterscheidet sich von dem in Fig. 5 dargestellten Ausführungsbeispiel dadurch, dass an dem plattenförmigen Element (38) zwei Federelemente (34a) in Form einer Schraubenfeder und zwei Federelemente (34b) in Form eines flächigen polymerem Schaummaterials angeordnet sind, wobei das Schaummaterial wenigstens teilweise elastisch ausgebildet ist (sogenannter "Spannschaum"). Die Federelemente (34a, 34b) liegen bei bestehender formschlüssiger Verbindung (vgl. in Fig. 7 die rechte Pol-Aufnahme 24) zwischen der Batteriezelle (10) und der Pol-Aufnahme (24) in einem gespannten Zustand vor und üben eine Druckkraft auf das plattenförmige Element (38) und einen Zellenkörper (12) der Batteriezelle (10) aus, der sich von dem verengten Bereich (16) des Pols (14) erstreckt. Durch Vorsehen der Federelemente (34a, 34b) kann die formschlüssige Verbindung zur wesentlichen Erhöhung der Stabilität derselben vorteilhaft verspannt werden.

## Patentansprüche

1. Verbindungsvorrichtung (22) zum Verbinden von wenigstens zwei Batteriezellen (10), die jeweils einen Pol (14) mit wenigstens einem einen Hinterschnitt, vorzugsweise in Längsrichtung der Batteriezelle (10), bildenden verengten Bereich (16) aufweisen,
wobei die Verbindungsvorrichtung (22) wenigstens zwei voneinander beabstandete Pol-Aufnahmen (24) mit wenigstens einer Wandung (26) aufweist, wobei zum Verbinden der Batteriezellen (10) in jede Pol-Aufnahme (24) jeweils ein Pol (14) der zu verbindenden Batteriezellen (10) wenigstens teilweise einbringbar ist, wobei die Wandung (26) jeder Pol-Aufnahme (24) wenigstens bereichsweise plastisch verformbar ist, und wobei nach dem Einbringen eine formschlüssige Verbindung (31) zwischen der Batteriezelle (10) und der Pol-Aufnahme (24) durch plastisches Verformen der Wandung (30) in Richtung des verengten Bereichs (16) des Pols (14) herstellbar ist,
**dadurch gekennzeichnet, dass**
jede Pol-Aufnahme (24) einen einseitig offenen Aufnahmebereich (28) aufweist, wobei in dem Aufnahmebereich (28) ein Federelement (34) angeordnet ist, wobei das Federelement (34) bei bestehender formschlüssiger Verbindung (31) zwischen der Batteriezelle (10) und der Pol-Aufnahme (24) in einem gespannten Zustand zwischen der Wandung (26) und dem Pol (14) angeordnet ist und eine Druckkraft auf die Wandung (26) und den Pol (14) ausübt.

2. Verbindungsvorrichtung (22) nach Anspruch 1, **dadurch gekennzeichnet, dass** ein Bereich (30) der Wandung zur Herstellung der formschlüssigen Verbindung (31) an den verengten Bereich (16) des Pols (14) durch plastisches Verformen anpressbar ist.

3. Verbindungsvorrichtung (22) nach einem der Ansprüche 1 oder 2, **dadurch gekennzeichnet, dass** die Verbindungsvorrichtung (22) zur Herstellung einer elektrisch leitenden Verbindung zwischen den Batteriezellen (10) wenigstens teilweise aus einem elektrisch leitfähigen Material besteht.

4. Verbindungsvorrichtung nach einem der vorstehenden Ansprüche, **dadurch gekennzeichnet, dass** das Federelement (34) wenigstens teilweise oder zur Gänze aus einem elektrisch leitfähigen Material besteht.

5. Verbindungsvorrichtung nach einem der vorstehenden Ansprüche, **dadurch gekennzeichnet, dass** das Federelement (34) in Form einer Schraubenfeder oder in Form eines flächigen polymerem Schaummaterials ausgebildet ist, der wenigstens teilweise elastisch ausgebildet ist.

6. Verbindungsvorrichtung nach Anspruch 5, **dadurch gekennzeichnet, dass** das Federelement (34) in Form eines flächigen polymerem Schaummaterials ausgebildet ist, der wenigstens teilweise elastisch ausgebildet ist und, dass das polymere Schaummaterial mit einer elektrisch leitfähigen Beschichtung oder einer Metallisierung versehen ist.

7. Verfahren zum Verbinden von wenigstens zwei Batteriezellen (10), die jeweils einen Pol (14) mit wenigstens einem einen Hinterschnitt, vorzugsweise in Längsrichtung der Batteriezelle (10), bildenden verengten Bereich (16) aufweisen, wobei das Verfahren die folgenden Schritte umfasst:
(A) Bereitstellen einer Verbindungsvorrichtung (22) nach Anspruch 1 zum Verbinden der Batteriezellen (10), wobei die Verbindungsvorrichtung (22) wenigstens zwei voneinander beabstandete Pol-Aufnahmen (24) mit wenigstens einer Wandung (26) aufweist, wobei die Wandung (26) jeder Pol-Aufnahme (24) wenigstens bereichsweise plastisch verformbar ist,
(B) wenigstens teilweises Einbringen jedes Pols (14) in jeweils eine Pol-Aufnahme (24) und
(C) Formschlüssiges Verbinden jeder Batteriezelle (10) mit der Pol-Aufnahme (24) durch plastisches Verformen der Wandung (26) in Richtung des verengten Bereichs (16) des Pols (14),
**dadurch gekennzeichnet, dass**
jede Pol-Aufnahme (24) einen einseitig offenen Aufnahmebereich (28) aufweist, wobei in dem Aufnahmebereich (28) ein Federelement (34) angeordnet ist, und wobei während oder nach Schritt (B) das Federelement (34) durch Aufeinanderzubewegen der Pol-Aufnahme (24) und des Pols (14) in einen gespannten Zustand überführt wird, in welchem das Federelement (34) zwischen der Wandung (26) und dem Pol (14) angeordnet ist und eine Druckkraft auf die Wandung (26) und den Pol (14) ausübt, und wobei Schritt (C) unter Beibehaltung des gespannten Zustands vorgenommen wird.

8. Verfahren nach Anspruch 7, **dadurch gekennzeichnet, dass** die in Schritt (A) bereitgestellte Verbindungsvorrichtung (22) zur Herstellung einer elektrisch leitenden Verbindung zwischen den Batteriezellen (10) wenigstens teilweise aus einem elektrisch leitfähigen Material besteht.

## Claims

1. Connecting apparatus (22) for connecting at least two battery cells (10) which each have a pole (14) having at least one constricted region (16) which forms an undercut, preferably in the longitudinal direction of the battery cell (10),
wherein the connecting apparatus (22) has at least two pole receptacles (24) which are spaced apart from one another and have at least one wall (26), wherein in each case one pole (14) of the battery cells (10) which are to be connected can be at least partially inserted into each pole receptacle (24) in order to connect the battery cells (10), wherein the wall (26) of each pole receptacle (24) is plastically deformable at least in regions, and wherein, after said insertion, an interlocking connection (31) can be established between the battery cell (10) and the pole receptacle (24) by plastic deformation of the wall (30) in the direction of the constricted region (16) of the pole (14),
**characterized in that**
each pole receptacle (24) has a receptacle region (28) which is open on one side, wherein a spring element (34) is arranged in the receptacle region (28), wherein the spring element (34), when there is an existing interlocking connection (31) between the battery cell (10) and the pole receptacle (24), is arranged between the wall (26) and the pole (14) in a tensioned state, and exerts a pressure force onto the wall (26) and the pole (14).

2. Connecting apparatus (22) according to Claim 1, **characterized in that** a region (30) of the wall can be pressed against the constricted region (16) of the pole (14) by plastic deformation in order to establish the interlocking connection (31).

3. Connecting apparatus (22) according to either of Claims 1 and 2, **characterized in that** the connecting apparatus (22) is composed at least partially of an electrically conductive material in order to establish an electrically conductive connection between the battery cells (10).

4. Connecting apparatus according to one of the preceding claims, **characterized in that** the spring element (34) is at least partially or entirely composed of an electrically conductive material.

5. Connecting apparatus according to one of the preceding claims, **characterized in that** the spring element (34) is in the form of a helical spring or in the form of a flat polymeric foam material which is of at least partially elastic design.

6. Connecting apparatus according to Claim 5, **characterized in that** the spring element (34) is in the form of a flat polymeric foam material which is of at least partially elastic design, and **in that** the polymeric foam material is provided with an electrically conductive coating or a metallization.

7. Method for connecting at least two battery cells (10) which each have a pole (14) with at least one constricted region (16) which forms an undercut, preferably in the longitudinal direction of the battery cell (10), wherein the method comprises the following steps:
(A) providing a connecting apparatus (22) according to Claim 1 for connecting the battery cells (10), wherein the connecting apparatus (22) has at least two pole receptacles (24) which are spaced apart from one another and have at least one wall (26), wherein the wall (26) of each pole receptacle (24) can be plastically deformed at least in regions,
(B) at least partially inserting each pole (14) into a respective pole receptacle (24), and
(C) connecting each battery cell (10) to the pole receptacle (24) in an interlocking manner by plastic deformation of the wall (26) in the direction of the constricted region (16) of the pole (14),
**characterized in that**
each pole receptacle (24) has a receptacle region (28) which is open on one side, wherein a spring element (34) is arranged in the receptacle region (28), and wherein the spring element (34) is moved to a tensioned state by movement of the pole receptacle (24) and of the pole (14) towards one another during or after step (B), the spring element (34) being arranged between the wall (26) and the pole (14) and exerting a pressure force onto the wall (26) and the pole (14), and wherein step (C) is performed while maintaining the tensioned state.

8. Method according to Claim 7, **characterized in that** the connecting apparatus (22) which is provided in step (A) is composed at least partially of an electrically conductive material for establishing an electrically conductive connection between the battery cells (10).

## Revendications

1. Dispositif de connexion (22) pour la connexion d'au moins deux cellules de batterie (10) comportant respectivement un pôle (14) avec au moins une région (16) rétrécie formant un détouré arrière, de préférence dans la direction longitudinale de la cellule de batterie (10) ; le dispositif de connexion (22) comportant au moins deux logements de pôle (24) espacés l'un par rapport à l'autre avec au moins une paroi (26), sachant que pour la connexion des cellules de batterie (10), respectivement un pôle (14) des cellules de batterie (10) à relier peut être amené au moins en partie dans chaque logement de pôle (24), la paroi (26) de chaque logement de pôle (24) étant au moins déformable de façon plastique sur certaines zones et pouvant être réalisée après établissement d'une connexion par complémentarité de formes (31) entre la cellule de batterie (10) et le logement de pôle (24) par déformation plastique de la paroi (30) en direction de la région (16) rétrécie du pôle (14) ;
**caractérisé en ce que** :
chaque logement de pôle (24) comporte une région de logement (28) ouverte unilatéralement, un élément à ressort (34) étant disposé dans la région de logement (28), l'élément à ressort (34) étant disposé dans un état serré entre la paroi (26) et le pôle (14) pour la connexion existante par complémentarité de formes (31) entre la cellule de batterie (10) et le logement de pôle (24) et exerçant une force de pression sur la paroi (26) et le pôle (14).

2. Dispositif de connexion (22) selon la revendication 1, **caractérisé en ce qu'**une région (30) de la paroi peut être comprimée par déformation plastique pour établir la connexion par complémentarité de formes (31) au niveau de la région (16) rétrécie du pôle (14).

3. Dispositif de connexion (22) selon l'une quelconque des revendications 1 ou 2, **caractérisé en ce que** le dispositif de connexion (22) se compose au moins en partie d'un matériau électriquement conducteur pour établir une connexion électriquement conductrice entre les cellules de batterie (10).

4. Dispositif de connexion selon l'une quelconque des revendications précédentes, **caractérisé en ce que** l'élément à ressort (34) se compose au moins en partie ou en totalité d'un matériau électriquement conducteur.

5. Dispositif de connexion selon l'une quelconque des revendications précédentes, **caractérisé en ce que** l'élément à ressort (34) prend la forme d'un ressort à vis ou la forme d'une matière en mousse plate en polymère réalisée au moins en partie de façon élastique.

6. Dispositif de connexion selon la revendication 5, **caractérisé en ce que** l'élément à ressort (34) prend la forme d'une matière en mousse plate en polymère réalisée au moins en partie de façon élastique et que la matière en mousse en polymère est pourvue d'un revêtement électriquement conducteur ou d'une métallisation.

7. Procédé pour la connexion d'au moins deux cellules de batterie (10) comportant respectivement un pôle (14) avec au moins une région (16) rétrécie formant un détouré arrière, de préférence dans la direction longitudinale de la cellule de batterie (10), le procédé comprenant les étapes suivantes :
(A) mise à disposition d'un dispositif de connexion (22) selon la revendication 1 pour la connexion des cellules de batterie (10), le dispositif de connexion (22) comportant au moins deux logements de pôle (24) espacés l'un par rapport à l'autre avec au moins une paroi (26), la paroi (26) de chaque logement de pôle (24) étant au moins déformable de façon plastique sur certaines zones ;
(B) placement au moins partiel de chaque pôle (14) dans respectivement un logement de pôle (24) ; et
(C) liaison par complémentarité de formes de chaque cellule de batterie (10) avec le logement de pôle (24) par déformation plastique de la paroi (26) en direction de la région (16) rétrécie du pôle (14) ;
**caractérisé en ce que** :
chaque logement de pôle (24) comporte une zone de logement (28) ouverte unilatérale, un élément à ressort (34) étant disposé dans la région de logement (28) et l'élément à ressort (34) étant transféré pendant ou après l'étape (B) par déplacement l'un sur l'autre du logement de pôle (24) et du pôle (14) dans un état serré dans lequel l'élément à ressort (34) est disposé entre la paroi (26) et le pôle (14) et une force de pression s'exerçant sur la paroi (26) et le pôle (14) et l'étape (C) étant réalisée en maintenant l'état serré.

8. Procédé selon la revendication 7, **caractérisé en ce que** le dispositif de connexion (22) mis à disposition à l'étape (A) se compose au moins en partie d'un matériau électriquement conducteur pour établir une connexion électriquement conductrice entre les cellules de batterie (10).
